# EUROPÄISCHE PATENTANMELDUNG

(11) **EP 1 382 519 A2**
(43) Veröffentlichungstag der Anmeldung: **21.01.2004**
(21) Anmeldenummer: 03011290.8
(22) Anmeldetag: 17.05.2003
(51) Int. Cl.: B62H 3/00, B62H 5/00, G07F 17/12, G07F 7/00

(54) **Anordnung für die Vermietung von Fahrrädern**

(30) Priorität: 16.07.2002 DE 20210786 U
(71) Anmelder: JOSTA Technik GmbH, 40477 Düsseldorf (DE)
(72) Erfinder: Blume, Ernst, 40477 Düsseldorf (DE)
(74) Vertreter: Habbel, Ludwig (Lutz), Dipl.-Ing.

(57) **Zusammenfassung**

Die Erfindung bezieht sich auf eine Anordnung für die Vermietung von Fahrrädern, mit zwei oder mehr Stationen (1), und mit einer Mehrzahl von Fahrrädern (3), wobei in jeder Station Abstellplätze (2) für mehrere Fahrräder (3) vorgesehen sind, und wobei in jeder Station (1) ein Terminal (5) vorgesehen ist, welches als Zahlungsterminal zum Entrichten eines Pfand- oder Mietpreises ausgestaltet ist, wie mittels eines Münzeinwurf- und/oder Geldscheineinzug- und/oder Kartenlesegerätes, und mit motorisch betätigbaren, automatisch vom Terminal aus zu öffnenden Riegeln (9), welche die Fahrräder in ihren jeweiligen Abstellplätzen (2) festlegen, sowie mit einer am Terminal (5) bedienbaren Schaltung, die nach Akzeptanz des Zahlungsmittels die Riegel an einem vom Benutzer wählbaren - wie mittels Tastatur oder Touch- Screen (6) - Fahrrades freischaltet, und mit Sensoren an den Abstellplätzen, welche ein in den Abstellplatz eingestelltes Fahrrad registrieren - wie als Druckschalter, Drucksensoren, Näherungsschalter, induktiv oder optisch messende Sensoren -, wobei die vorerwähnte Schaltung nur die Riegel von solchen Abstellplätzen freischaltet, in denen jeweils ein Fahrrad sensorisch registriert ist.

## Beschreibung

Die Erfindung betrifft eine Anordnung für die Vermietung von Fahrrädern.

Aus der Praxis sind Mietsysteme bekannt, bei denen in einer Zentrale, beispielsweise einer Hotelrezeption, Fahrräder gegen Entgelt ausgeliehen werden können, wobei zeitabhängig der Mietpreis zu entrichten ist. Derartige Systeme sind vergleichsweise personalaufwendig, wenn Fahrräder an Hotelgäste vermietet werden. Liegen Daten des Benutzers bereits vor, übertragen auf eine freie Vermietbarkeit von Fahrrädern im kommunalen Raum, beispielsweise in Stadtzentren, in Bahnhofsnähe u. dgl. erfordern derartige Systeme einen unwirtschaftlich hohen Aufwand.

Aus der Praxis ist weiterhin ein Mietsystem für Fahrräder bekannt, wobei die einzelnen Fahrräder anhand einer individuellen Kennung vom Benutzer identifiziert werden können und telefonisch freigeschaltet werden können, nachdem der Benutzer sich bei einer Mietzentrale angemeldet hat. Dieses System erfordert einen vergleichsweise hohen Personalaufwand dadurch, daß die Fahrräder nicht zu einer zentralen Abhohl- und Sammelstelle gebracht werden. Fahrräder, die in städtischen Bereichen abgestellt werden, wo lediglich eine geringe Nachfrage nach der Vermietung von Fahrrädern besteht, stehen daher über lange Zeit ungenutzt, was einerseits unwirtschaftlich ist oder andererseits einen speziellen Sammelservice erfordert, der ebenfalls unwirtschaftlich ist.

Der Erfindung liegt die Aufgabe zugrunde, eine Anordnung für die Vermietung von Fahrrädern zu schaffen, die für den Benutzer eine problemlose und schnelle Bedienung beim Abholen und bei der Rückgabe der Fahrräder ermöglicht und welche für den Betreiber mit geringem Personalaufwand zu betreiben ist.

Diese Aufgabe wird durch eine Anordnung mit den Merkmalen des Anspruches 1 gelöst.

Die Erfindung schlägt mit anderen Worten eine Fahrradstation vor, die vollautomatisch bedient werden kann. Der Ablauf einer Fahrradvermietung kann dabei wie folgt aussehen:

Der Benutzer trifft in der Station ein und meldet sich an. Dies kann beispielsweise durch Einführen einer Geldkarte, einer Scheckkarte oder ähnlichen Karte in ein Kartenlesegerät erfolgen, welches am Terminal der Station vorgesehen ist. Diese Anmeldung des Benutzers ermöglicht später eine Abrechnung und stellt für den Betreiber der Station eine Sicherheit dar, daß der Benutzer angesprochen werden kann oder finanziell belastet werden kann, sollte das Fahrrad nicht zurückgegeben werden. Bei der Anmeldung kann vorgesehen sein, persönliche Daten des Benutzers, wie Name und Anschrift im Terminal zu hinterlegen, so daß später ggf. eine Rechnungstellung erfolgen kann. Es kann jedoch alternativ auch vorgesehen sein, vergleichsweise anonymere Daten des Benutzers im Terminal zu hinterlegen, beispielsweise lediglich die Bankverbindung, die dann später eine vollautomatische Belastung des Kundenkontos ermöglicht.

Die Anmeldung ist vorzugsweise erst dann abgeschlossen, wenn der Kunde über eine spezielle Bedieneinheit sein Einverständnis mit den Geschäftsbedingungen der Fahrradstation erklärt. In diesen Geschäftsbedingungen ist beispielsweise der Abrechnungsmodus erläutert sowie die Folgen, wenn das Fahrrad nicht oder nicht einer vorgebenen Zeitspanne zurückgegeben wird.

Nach Anmeldung kann der Kunde auswählen, welches Fahrrad er mieten möchte. Hierzu ist vorgesehen, daß die Abstellplätze, die an der Station vorgesehen sind, für den Kunden eindeutig erkennbar und identifizierbar sind, beispielsweise durch eine Numerierung. Nach abgeschlossener Anmeldung kann daher der Kunde das von ihm zuvor ausgesuchte Fahrrad auswählen, indem er die entsprechende Nummer in das Terminal eingibt, beispielsweise durch eine Tastatur oder es werden mittels eines Touch-Screens die verfügbaren Fahrräder bzw. die mit Fahrrädern bestückten Abstellplätze dargestellt, wobei der Kunde durch Druck auf den entsprechenden Bildschirmbereich des Touch-Screens das von ihm gewünschte Fahrrad auswählen kann.

Die Kennzeichnung der einzelnen Abstellplätze mit individuellen Kennzeichen stellt eine vergleichsweise einfache Möglichkeit dar, um den Kunden ein bestimmtes Fahrrad auswählen zu lassen. Es kann jedoch auch vorgesehen sein, jedes Fahrrad individuell zu kennzeichnen, beispielsweise eines maschinenlesbaren Transponders und mittels einer für den Benutzer lesbaren Kennung. Sensoren an den Abstellplätzen können die maschinenlesbare Kennung auswerten und am Terminal kann dementsprechend diese Kennung angezeigt werden, so daß der Benutzer unmittelbar das Fahrrad und nicht einen Abstellplatz auswählt, wobei jedoch beide vorgenannten Verfahrensweisen dazu führen, daß der Kunde eindeutig ein bestimmtes Fahrrad von sämtlichen in der Abstellanlage befindlichen Fahrrädern auswählen kann.

Die Auswahl eines Fahrrades führt dazu, daß Riegelmittel automatisch freigeschaltet werden, welche zuvor das Fahrrad in seinem Abstellplatz verriegelt hielten. Die Riegelmittel können als bogen- oder stangenförmige Riegel ausgestaltet sein, die die Laufräder und/oder den Rahmen des Fahrrades durchgreifen, oder welche schrankenartig das Fahrrad in seinem Abstellplatz sperren und eine Entnahme des Fahrrades aus dem Abstellplatz verhindern.

Die Riegel sind motorisch angetrieben und eine entsprechende Motorsteuerung ist im Terminal vorgesehen, so daß nach Auswahl eines bestimmten Fahrrades durch den Benutzer die entsprechenden Riegelmittel des ausgewählten Fahrrades freigeschaltet werden. Der Benutzer kann nun das Fahrrad aus dem Abstellplatz nehmen.

Die Riegel können als Bügel, Stange, Klaue o. dgl. ausgestaltet sein, oder in Art einer Schutzhaube, so dass bei Aufstellung der Station im Freien auf eine zusätzliche Überdachung verzichtet werden kann. Die Schutzhaubenartigen Bügel stellen nicht nur einen Witterungs- sondern auch einen Vandalismusschutz dar, so dass die Überwachung der Station erleichtert und mit geringerem technischen oder personellem / zeitlichem Aufwand erfolgen kann.

Bei der Anmeldung ist die Anmeldezeit registriert worden, entweder in einem Speicher des Terminals oder auf der Karte des Benutzers, welcher diese in das Terminal eingeführt hat.

Bei einer Rückgabe des Fahrrades wird die Mietdauer automatisch berechnet und anhand der Mietdauer der Mietpreis. Nun kann vorgesehen sein, daß der Benutzer mittels Münzen oder Geldscheinen bar den Mietpreis entrichtet, falls entsprechende Münzschlitze oder Geldeinzugsschlitze am Terminal vorgesehen sind. Alternativ kann vorgesehen sein, wenn die Adressdaten des Benutzers bekannt sind, daß dem Benutzer eine Rechnung zugeschickt wird. Die Rechnungserstellung kann, vom Terminal über Datenfernleitung automatisiert, in einer Mietzentrale erfolgen, wo die entsprechenden Drucker stehen. Alternativ kann im Terminal eine Druckeinheit vorgesehen sein, welche die Rechnung ausdruckt. Besonders einfach für sowohl den Betreiber als auch den Kunden und mit besonders schnellen Abfertigungszeiten verbunden ist die Möglichkeit, daß anhand der berechneten Mietdauer und des daraus sich ergebenden Mietpreises automatisch eine Belastung des Kundenkontos erfolgt, falls die dazu erforderlichen Kundendaten bekannt sind. Dies kann zuvor beim Anmelden durch Einführen von Scheck-, Kreditkarten oder ähnlichen Zahlungsmitteln vorbereitet sein.

Es kann vorgesehen sein, daß beim Anmelden der Benutzer die voraussichtliche Mietdauer eingibt, beispielsweise mittels einer alphanumerischen Tastatatur. Nach Überschreiten der durch den Benutzer selbst festgelegten Mietdauer, ggf. zzgl. einer gewissen Toleranz, oder alternativ nach Überschreiten einer fest vorgegebenen zulässigen Höchstmietdauer, kann vorgesehen sein, daß dem Benutzer eine Pauschalsumme in Rechnung gestellt wird bzw. automatisch sein Konto damit belastet wird, z. B. in Höhe des Fahrradpreises, oder in Höhe eines Bearbeitungsentgelts, wenn nämlich nach Überschreiten der Höchstparkdauer durch das Personal des Fahrradvermieters das nicht zurückgegebene Fahrrad gesucht und zur Station zurückgeführt werden muß. Durch diese Regelung wird durch den Benutzer der Anreiz geschaffen, das Fahrrad rechtzeitig in die Station wieder einzustellen. Selbstverständlich ist vorgesehen, daß bei technischen Defekten, die z. B. die Rückgabe des Fahrrades zur Station unmöglich machen, durch telefonische Kontaktaufnahme die Folgen abgewendet werden können, die sich aus einer Überschreitung der Höchstmietdauer ergeben, so daß der Benutzer im Falle eines derartigen Defektes an einer derartigen telefonischen Kontaktaufnahme interessiert ist. Für den Vermieter ergibt sich der Vorteil, daß der Benutzer den Standort des Fahrrades angeben kann, so daß das Abholen des Fahrrades ohne Suchaufwand erfolgen kann.

Gegebenenfalls kann vorteilhaft vorgesehen sein, im Fahrrad einen Sender zu installieren, welcher die Positionsbestimmung des Fahrrades ermöglicht, so daß in jedem Fall ein optimal schnelles Auffinden des Fahrrades sichergestellt ist.

Vorteilhaft können mehrere Stationen vorgesehen sein, die dem Benutzer die wahlweise Rückgabe an jeder beliebigen dieser Stationen ermöglichen. Hierzu sind die Stationen miteinander über Datenleitungen verbunden, beispielsweise über drahtlose oder drahtgebundene Telefonnetze. Bei Rückgabe des Fahrrades stellt der Benutzer das Fahrrad in einen offenen, also entriegelten, leeren Abstellplatz ein. Sensoren können vorgesehen sein, die bei in den Abstellplatz eingeführtem Fahrrad automatisch die Riegelmittel betätigen. Um Verletzungsgefahren abzuwenden, kann jedoch vorteilhaft vorgesehen sein, daß der Benutzer durch Tastendruck oder mittels ähnlicher Bedienungselemente bewußt die Verriegelung des Fahrrades in dem Abstellplatz auslösen kann. Anschließend geht der Benutzer zum Terminal, identifiziert sich wie bei der Anmeldung mittels einer Karte und gibt anschließend den Abstellplatz an, in welchen er soeben das zurückgegebene Fahrrad eingestellt hat. Die automatische Mietdauer- und Mietpreisberechnung kann nun erfolgen, wobei der Zeitpunkt des Mietbeginns ggf. auf der Karte des Benutzers abgespeichert sein kann, so daß zur Mietdauerberechnung keine Datenverbindung zwischen zwei Stationen aufgebaut werden muß, falls das Fahrrad an einer anderen Station abgegeben wird als derjenigen, an der es abgeholt wurde. Die Mietdauer und Mietpreisberechnung kann daher vorzugsweise lokal erfolgen, jedoch ist spätestens anschließend ein Datenaustausch zwischen den Stationen erforderlich, um die Rückgabe des Fahrrades zu registrieren und damit die Foglen zu unterbinden, die ansonsten aus einer Überschreitung der Höchstmietdauer resultieren könnten. Insbesondere wenn keine speziellen Kundenkarten vom Fahrradvermieter ausgegeben werden, sondern wenn die Verwendung üblicher Scheck- oder Kreditkarten oder ähnlicher Zahlungsmittel, wie Geldkarten od. dgl. vorgesehen ist, kann jedoch zur Berechnung der Mietdauer die Datenverbindung zwischen zwei Stationen vorgesehen sein, da in diesen Fällen die vom Benutzer verwendete Karte nicht die Informationen über Beginn und Ende des Mietverhältnisses enthält.

Vorzugsweise kann am Terminal eine Sprachverbindung zur Mietzentrale aufgebaut werden, um etwaige Fragen des Benutzers klären zu können oder einen ähnlichen Informationsaustausch zwischen Benutzer und Zentrale zu ermöglichen. Hierzu kann beispielsweise preisgünstig ein drahtgebundenes oder drahtloses Telefonnetz Verwendung finden.

Weiterhin kann vorteilhaft vorgesehen sein, daß am Terminal Zusatzeinrichtungen in Form von Informationseinrichtungen, beispielsweise mit Hilfe von Bildschirm-Displays vorgesehen sind, welche dem Benutzer über das Mieten des Fahrrades hinaus die Nutzung zusätzlicher Dienstleistungen ermöglichen. So kann beispielsweise die Einsicht in ein Hotelverzeichnis, in Radwegekarten, in den Veranstaltungskalender der betreffenden Kommune od. dgl. ermöglicht werden, so daß das Terminal nicht nur ein Miet- und Zahl-Terminal, sondern darüber hinaus auch ein regelrechtes Informationsterminal ist.

Die Sicherung der Abstellplätze kann vorteilhaft mittels Fernüberwachung erfolgen, beispielsweise mit Hilfe von Überwachungskameras, deren Bilder für einen bestimmten Zeitraum zwischengespeichert werden und beispielsweise nach dem Prinzip eines Rotationsspeichers nach einer bestimmten Zeit überschrieben werden. Die Kamerabilder können zur Identifizierung von Wandalen oder Dieben dienen, insbesondere wenn auch Lautsprecher im Bereich der Abstellplätze vorgesehen sind, die von der Mietzentrale aus angesprochen werden können, können die Kamerabilder auch dazu dienen, von der Mietzentrale aus gesprochene Hilfestellung an die Benutzer zu richten, wenn es beispielsweise Schwierigkeiten mit der Entnahme oder dem Einstellen von Fahrrädern aus den Abstellplätzen bzw. in die Abstellplätze geben sollte. Auch im Sinne einer Schadensbegrenzung kann eine derartige Lautsprecheranlage genutzt werden, wenn bei sich anbahnenden Zerstörungen oder versuchten Diebstählen die betreffenden Personen möglichst frühzeitig von dem Personal aus der Mietzentrale heraus angesprochen werden können.

Eine Kameraüberwachung kann zudem dazu genutzt werden, den Bestand an Fahrrädern in den einzelnen Stationen zu erfassen, so daß ggf. Umverteilungen vorgenommen werden können. Eine derartige Erfassung und Meldung des Fahrzeugbestands aus den einzelnen Stationen in die Mietzentrale kann jedoch auch bilderlos aufgrund der Sensorsignale erfolgen, mittels welcher in den einzelnen Stationen registriert wird, in welchen der Abstellplätze sich Fahrräder befinden.

Ein Ausführungsbeispiel einer vorschlagsgemäßen Anordnung für die Vermietung von Fahrrädern wird anhand der rein schematischen Darstellung nachfolgend näher erläutert.

Dabei ist mit 1 allgemein eine Station bezeichnet, an welcher Fahrräder gemietet bzw. wo sie wieder zurückgegeben werden können. Die Station 1 umfaßt daher mehrere Abstellplätze 2 für Fahrräder, wobei rein beispielhaft ein Fahrrad 3 im linken Abstellplatz 2 dargestellt ist. Eine Aberdachung 4 schützt die Fahrräder 3 und auch die Abstellplätze 2 vor Witterungseinflüssen.

Die Station weist weiterhin ein Terminal 5 auf, mit einem Display 6, welches als Touch-Screen ausgestaltet ist, so daß das Terminal 5 keine zusätzlichen, z. B. alphanumerischen, Eingabemittel benötigt. Zwei Schlitze 7 dienen zum Einführen von Zahlungsmitteln und zur Ausgabe von Quittungen, Rechnungen, ausgedruckten Wegbeschreibungen oder Kartenausschnitten od. dgl.

Die einzelnen Abstellplätze 2 sind von 1 bis 5 durchnumeriert, und das Display 6 weist entsprechend berührungssensitive und mit denselben Nummern versehene Felder 8 auf, so daß durch Druck auf ein entsprechendes Feld 8 des Displays 6 ein bestimmter Abstellplatz 2 ausgewählt werden kann, so daß der Benutzer auf diesem Wege ein bestimmtes Fahrrad 3 auswählen kann. Jeder Abstellplatz 2 weist Riegel 9 auf, wobei der zweite Abstellplatz von rechts in seiner geöffneten Stellung dargestellt ist: Der Riegel 9 ist mitsamt einer von zwei Bodenstützen 10, die an jedem Abstellplatz 2 vorgesehen sind, in seine Offenoder Freigabestellung verschwenkt. Diese bewegliche der beiden Bodenstützen 10 jedes Abstellplatzes 2 weist einen Handgriff 11 auf, mit dessen Hilfe die Bodenstütze 10 samt Riegel 9 aus der dargestellten Freigabestellung in die Schließstellung zurückgeführt werden kann, die bei den anderen vier dargestellten Abstellplätzen 2 eingenommen ist.

Währen diese Verriegelungsbewegung vorzugsweise mittels des Handgriffes 11 durch den Benutzer von Hand ausgeführt wird, also bewußt ausgeführt wird, um Beschädigungen und/oder Verletzungen zu vermeiden, kann das Öffnen der Riegel 9 vorzugsweise vollautomatisch erfolgen, nachdem der Benutzer am Terminal 5 sich angemeldet und ein bestimmtes Fahrrad -, d. h. einen bestimmten Abstellplatz 2 - ausgewählt hat.

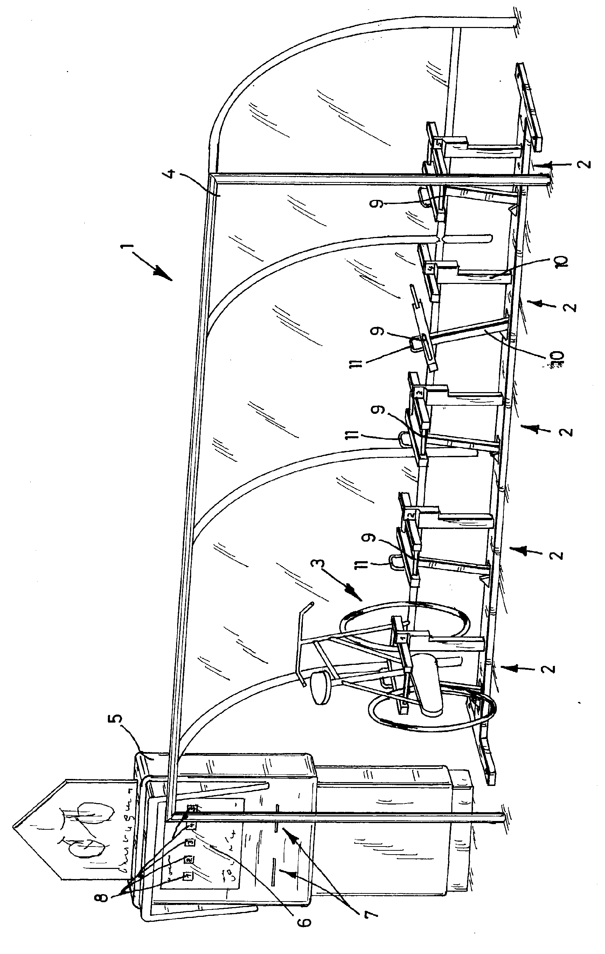

## Patentansprüche

1. Anordnung für die Vermietung von Fahrrädern,
mit zwei oder mehr Stationen,
und mit einer Mehrzahl von Fahrrädern,
wobei in jeder Station Abstellplätze für mehrere Fahrräder vorgesehen sind,
und wobei in jeder Station ein Terminal vorgesehen ist, welches als Zahlungsterminal zum Entrichten eines Pfandoder Mietpreises ausgestaltet ist,
wie mittels eines Münzeinwurf- und/oder Geldscheineinzugund/oder Kartenlesegerätes,
und mit motorisch betätigbaren, automatisch vom Terminal aus zu öffnenden Riegeln, welche die Fahrräder in ihren jeweiligen Abstellplätzen festlegen,
sowie mit einer am Terminal bedienbaren Schaltung, die nach Akzeptanz des Zahlungsmittels die Riegel an einem vom Benutzer wählbaren - wie mittels Tastatur oder Touch- Screen - Fahrrades freischaltet,
und mit Sensoren an den Abstellplätzen, welche ein in den Abstellplatz eingestelltes Fahrrad registrieren - wie als Druckschalter, Drucksensoren, Näherungsschalter, induktiv oder optisch messende Sensoren -,
wobei die vorerwähnte Schaltung nur die Riegel von solchen Abstellplätzen freischaltet, in denen jeweils ein Fahrrad sensorisch registriert ist.

2. Anordnung nach Anspruch 1, **dadurch gekennzeichnet, daß** jedes Fahrrad eine automatisch erkennbare, individuelle Kennung aufweist, wie einen hartmagnetisch codierten Bereich oder einen elektronisch codierten Chip.

3. Anordnung nach Anspruch 2, **dadurch gekennzeichnet, daß** die Stationen miteinander über drahtlose oder drahtgebundene Datenleitungen verbunden sind.

4. Anordnung nach Anspruch 2 und 3, **gekennzeichnet durch** eine Schaltung im Terminal zur Berechnung der Mietdauer vom Abholen des Fahrrades bis zum Abstellen des Fahrrades in derselben oder in einer anderen Station,
sowie zur Berechnung des Mietpreises unter Berücksichtigung der Mietdauer.

5. Anordnung nach Anspruch 2, **dadurch gekennzeichnet, daß** die Fahrräder zur Positionsbestimmung mit einem Sender versehen sind, welcher drahtlose Signale aussendet, die in einer Mietzentrale auswertbar sind.

6. Anordnung nach einem der vorhergehenden Ansprüche, **dadurch gekennzeichnet, daß** das Terminal eine Sprecheinrichtung zum Aufbau einer Zwei-Wege-Sprechverbindung zu einer Mietzentrale aufweist, wie einen Telefonanschluß.

7. Anordnung nach einem der vorhergehenden Ansprüche, **dadurch gekennzeichnet, daß** das Terminal Zusatzeinrichtungen aufweist, die vom Benutzer bedienbar sind und unabhängig vom Mietbetrieb sind, wie Städteinformationen, Veranstaltungskalender, Radwege, Karten u. dgl., wobei diese Zusatzeinrichtungen mittels eines interaktiv bedienbaren Displays zur Anzeige von Informationen ausgestaltet sind.

8. Anordnung nach einem der vorhergehenden Ansprüche, **gekennzeichnet durch** ein Kartenlesegerät zur Erfassung von abrechnungsrelevanten Daten des Benutzers - wie ein beim Vermietungsunternehmen eingerichtetes Konto, oder eine Bankverbindung des Benutzers -,
sowie **durch** eine Schaltung, welche nach Ablauf einer vorgegebenen Mietdauer ohne Rückgabe des Fahrrades den Benutzer einen vorgegebenen Pauschalpreis in Rechnung stellt.

9. Anordnung nach einem der vorhergehenden Ansprüche, **gekennzeichnet durch** ein Kartenlesegerät zur Erfassung von abrechnungsrelevanten Daten des Benutzers - wie ein beim Vermietungsunternehmen eingerichtetes Konto, oder eine Bankverbindung des Benutzers -,
sowie **durch** eine Schaltung zur Berechnung der Mietdauer anhand von auf der Karte des Benutzers oder im Terminal vorhandener Daten,
wobei die Schaltung anhand der berechneten Mietdauer den Benutzer mit dem Mietpreis belastet.

10. Anordnung nach einem der vorhergehenden Ansprüche, **dadurch gekennzeichnet, dass** der Riegel schutzhaubenartig ausgestaltet ist und das Fahrrad überdacht und / oder seitlich umgibt.
